**Europäisches Patentamt**

**European Patent Office**

**Office européen des brevets**

(19)

(11) Veröffentlichungsnummer: **0 158 041**
**B1**

(12) **EUROPÄISCHE PATENTSCHRIFT**

(45) Veröffentlichungstag der Patentschrift:
**11.05.88**

(21) Anmeldenummer: **85101545.3**

(22) Anmeldetag: **13.02.85**

(51) Int. Cl.⁴: **G 01 B 11/00, H 01 J 9/42**

(54) Vorrichtung zum Messen der Lage einer im Lichthaus angeordneten Lichtquelle.

(30) Priorität: **15.02.84 DE 3405306**

(43) Veröffentlichungstag der Anmeldung:
**16.10.85 Patentblatt 85/42**

(45) Bekanntmachung des Hinweises auf die Patenterteilung:
**11.05.88 Patentblatt 88/19**

(84) Benannte Vertragsstaaten:
**DE FR GB IT NL**

(56) Entgegenhaltungen:
**DE - A - 3 104 700**
**US - A - 3 482 495**

(73) Patentinhaber: **Standard Elektrik Lorenz Aktiengesellschaft, Lorenzstrasse 10, D-7000 Stuttgart 40 (DE)**

(72) Erfinder: **Forker, Dieter, Am Gänsbrunnen 5, D-7305 Altbach (DE)**
Erfinder: **Hassler, Joachim, Reinsburgstrasse 141, D-7000 Stuttgart 1 (DE)**
Erfinder: **Lau, Bernhard, Dr., Schubertstrasse 7/1, D-7307 Aichwald 3 (DE)**
Erfinder: **Schmidt, Rolf, Dieter-Bonhoeffer-Strasse 21, D-7300 Esslingen (DE)**

(74) Vertreter: **Pohl, Heribert, Dipl.-Ing et al, Standard Elektrik Lorenz AG Patent- und Lizenzwesen Postfach 30 09 29, D-7000 Stuttgart 30 (DE)**

## Beschreibung

Die Erfindung betrifft eine Vorrichtung zum Messen der Lage einer langgestreckten Lichtquelle in dem bei der Herstellung der Leuchtschirme von Farbbildröhren verwendeten Lichthaus, mit einer anstelle der Wannen-Maskeneinheit auf das Lichthaus aufsetzbaren, mit Anschlagflächen und optischen Abbildungseinrichtungen versehenen Grundplatte.

Aus der US-PS 3482495 ist eine Vorrichtung zum Messen der Lage einer Belichtungslampe in einem Lichthaus bekannt. Lichthäuser dienen zum Belichten der Leuchtstoffschicht, die einen Teil der Schirme von Farbbildröhren bildet. Das bekannte Lichthaus besitzt eine punktförmige Lichtquelle mit einem darüber angeordneten Kollimator. Die Messvorrichtung besteht aus einer Grundplatte mit Anschlagflächen, mit denen sie beim Aufsetzen auf ein Lichthaus auf diesem ausgerichtet wird. Unterhalb der Grundplatte sind acht optische Abbildungseinrichtungen, bestehend aus je zwei Umlenkspiegeln und einer bikonvexen Linse, angeordnet, welche die Belichtungslampe auf einem in der Mitte der Grundplatte angeordneten Schirm abbilden. Der Schirm ist in neun Quadrate unterteilt, von denen die aussenliegenden acht Quadrate ein Kreuz tragen und von den acht Abbildungssystemen beleuchtet werden. Die Messvorrichtung wird zur Eichung auf ein Standardlichthaus aufgesetzt. Dann werden die acht Abbildungssysteme so eingestellt, dass die acht Quadrate mittig beleuchtet werden. Dann wird die derart geeichte Messvorrichtung auf ein Lichthaus in der Fertigung aufgesetzt und dessen Belichtungslampe und dessen Anschlagspunkte werden so eingestellt, dass wiederum die acht Quadrate mittig beleuchtet werden.

Der Erfindung liegt die Aufgabe zugrunde, eine einfache Vorrichtung zum Messen der Lage von langgestreckten Lichtquellen in Lichthäusern anzugeben, welche der Lage entsprechende Messwerte liefert.

Die Lösung dieser Aufgabe erfolgt mit den im Anspruch 1 angegebenen Mitteln. Ausgestaltungen der Erfindung können den Ansprüchen 2 bis 5 entnommen werden.

Mit der neuen Vorrichtung kann in einer Messzeit von weniger als einer Minute die Lage von Belichtungslampen in Lichthäusern direkt gemessen werden. Die Anzeigeanordnung gibt direkt die Korrekturrichtung und -grösse an. Die Messgenauigkeit beträgt etwa für die Position der Lichtquelle in der Belichtungslampe $\pm 5\,\mu$m und der von der Sollage abweichende Winkel kann auf besser als $\pm 0,02°$ bestimmt werden.

Nachstehend wird ein Ausführungsbeispiel der Erfindung anhand der Figuren 1 bis 3 näher erläutert. Es zeigen:

Fig. 1a schematisch den Längsschnitt durch ein Lichthaus mit der aufgesetzten Messvorrichtung;

Fig. 1b die Draufsicht auf das Lichthaus gemäss Fig. 1a;

Fig. 2 die Draufsicht auf die Positionsdioden mit der darauf abgebildeten Lichtquelle der Belichtungslampe und

Fig. 3 ein Blockschaltbild der Auswerteschaltung.

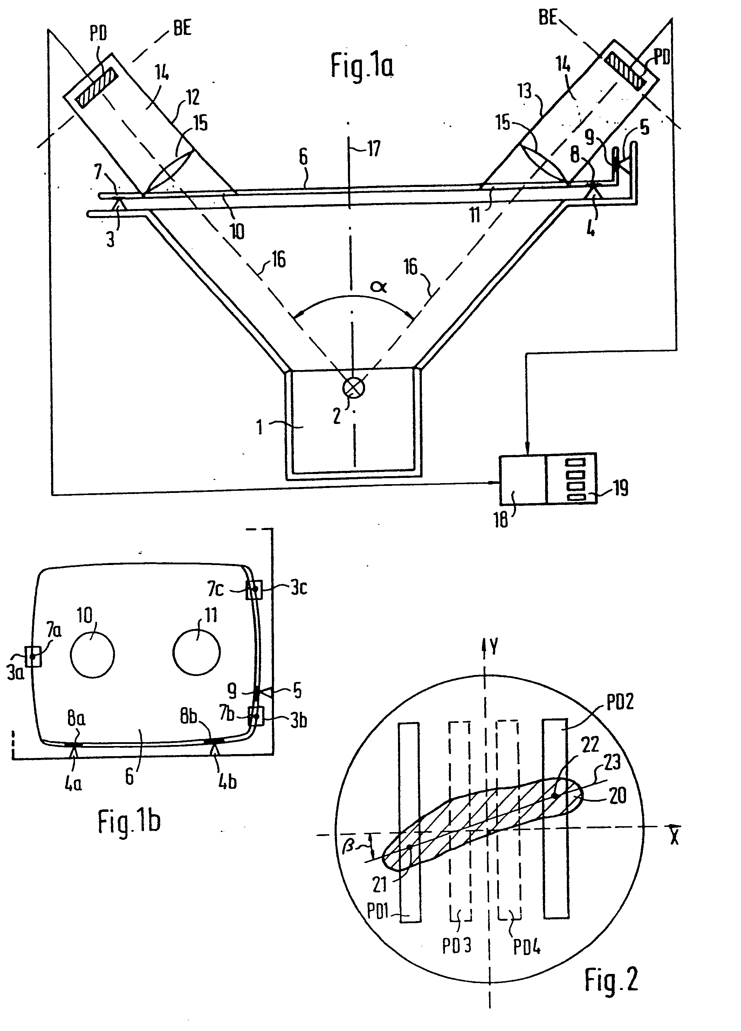

In Fig. 1a ist vereinfacht der Längsschnitt durch ein Lichthaus zur Belichtung der Leuchtschicht in der Wanne einer Farbbildröhre dargestellt. In dem Lampentopf 1 ist die Lichtquelle 2 angedeutet, welche einen langgestreckten und sich senkrecht zur Zeichenebene erstreckenden leuchtenden Körper besitzt. Die zum leuchtenden Körper bzw. der Lichtquelle gehörende Belichtungslampe ist nicht im einzelnen gezeigt. Üblicherweise wird als Belichtungslampe eine UV-Licht erzeugende Quecksilber-Höchstdrucklampe verwendet. Die Belichtungslampe ist in einer nicht gezeigten Halterung befestigt, welche eine Justierung der Belichtungslampe zulässt. Ausserdem sind die Spannungszuführung und die Kühlung der Belichtungslampe nicht gezeigt. Das Lichthaus weist am oberen Teil seines Konusses einen Rand auf, an dem sechs Anschlagpunkte 3a, 3b, 3c, 4a, 4b und 5 vorhanden sind. Auf die Anschlagpunkte 3a, b und c wird bei der Produktion die Wannen-Maskeneinheit einer Farbbildröhre zum Belichten aufgesetzt. Zum Messen der Lage der Lichtquelle wird auch die Grundplatte 6 der Messvorrichtung in gleicher Weise aufgesetzt und gegen die seitlichen Anschlagpunkte 4a, b und 5 gedrückt. Die senkrecht zur Längsachse der und durch die Lichtquelle 2 verlaufende Achse des Lichthauses ist mit 17 bezeichnet. Alle weiteren üblicherweise zu einem Lichthaus gehörenden Teile sind der besseren Übersicht wegen weggelassen worden.

Die Grundplatte 6 der Messvorrichtung weist sechs Anschlagflächen 7a, b, c, 8a, b und 9 auf, mit deren Hilfe sie auf dem Lichthaus ausgerichtet werden kann. Die Grundplatte 6 besitzt zwei Öffnungen 10 und 11, über denen je eine optische Abbildungseinrichtung 12, 13 angeordnet ist. Jede optische Abbildungseinrichtung 12 bzw. 13 besteht aus einem Rohr 14 und einem Objektiv 15. Am Ende des Rohres 14 sind in der Bildebene BE die Positionsdioden PD angeordnet. Bei den Positionsdioden handelt es sich beispielsweise um handelsübliche zweiachsige Positionsdetektoren, wie sie von der Fa. United Detector Technology, Inc., Santa Monica, Ca., vertrieben werden. Die optischen Abbildungseinrichtungen erzeugen ein Bild der Lichtquelle in der Bildebene BE. Die optischen Abbildungseinrichtungen liegen in einer näherungsweise senkrecht auf der Längsachse der Lichtquelle stehenden Ebene und sind so geneigt, dass ihre Achsen 16 einen Winkel α zwischen 45° und 135° einschliessen. An die Positionsdioden PD ist eine Auswerteschaltung 18 mit einer nachfolgenden Anzeigeanordnung 19 angeschlossen, wie nachstehend noch näher erläutert ist.

Fig. 1b macht besonders die Lage der Anschlagpunkte 3, 4 und 5, der Anschlagflächen 7, 8, 9 und die Form der Grundplatte 6 deutlich.

In Fig. 2 ist die Draufsicht auf die Positionsdioden PD im Rohr 14 der optischen Abbildungseinrichtung 12 gezeigt. Auf die Positionsdioden PD1 und PD2 ist das Bild 20 der Lichtquelle gezeichnet, wie es beispielsweise bei der Verwendung der Messvorrichtung dorthin projiziert wird. In die Positionsdioden ist ein Koordinatensystem eingezeichnet, dessen x-Achse rechtwinklig und dessen y-Achse parallel zur längeren Achse der Positionsdioden PD1 und PD2 verläuft. Die optischen Abbildungseinrichtungen sind derart auf der Grundplatte 6 angeordnet, dass das Bild 20 der Lichtquelle, wenn diese sich in ihrer Sollage befindet, mit der x-Achse zusammenfällt.

Die von den Positionsdioden PD bei einer Beleuchtung abgegebenen elektrischen Signale ermöglichen die direkte Bestimmung der Leuchtdichteschwerpunkte von Teilbereichen der Lichtquelle. In Fig. 2 sind diese Leuchtdichteschwerpunkte mit 21 und 22 bezeichnet und es ist ersichtlich, dass sich die Lichtquelle nicht in ihrer Sollage befindet. Die Abweichung besteht aus einer Verschiebung der y-Achse, ersichtlich am aus dem Koordinatenursprung verschobenen Schnittpunkt der Verbindungslinie 23 der Leuchtdichteschwerpunkte 21 und 22 mit der y-Achse, und einer Verdrehung der Verbindungslinie 23 um den Winkel β. Der Winkel β wird von der Verbindungslinie 23 und der x-Achse eingeschlossen. Die Grösse der Abweichung lässt sich durch einfache Verknüpfung der Signale von mindestens zwei Positionsdioden PD berechnen. Zur Prüfung der Geradlinigkeit der Lichtquelle sind weitere Positionsdioden notwendig. In Fig. 2 sind für diesen Fall zwei weitere Positionsdioden PD3 und PD4 gestrichelt eingezeichnet.

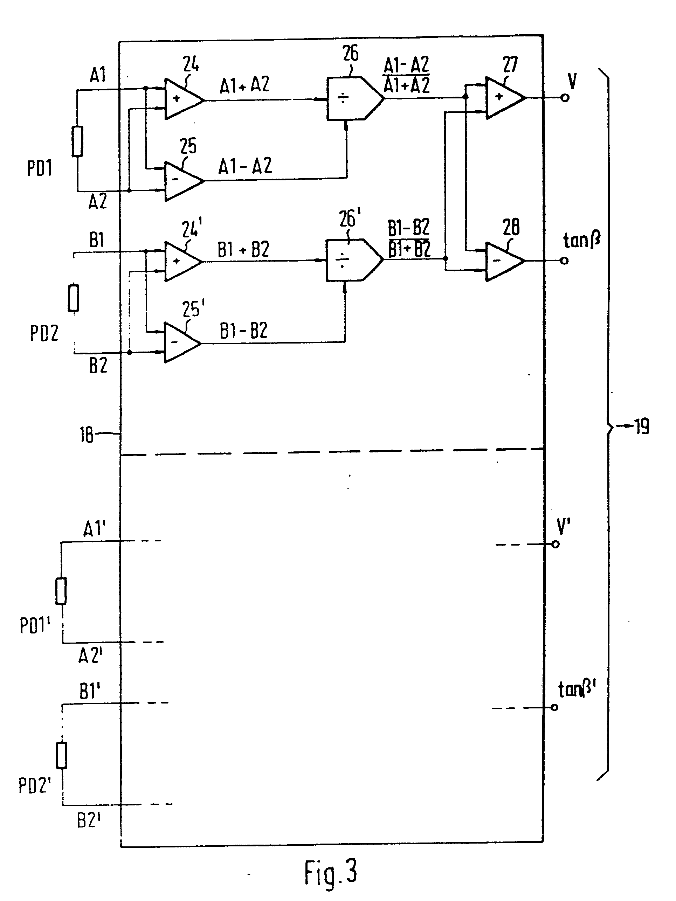

In Fig. 3 ist das Blockschaltbild der Auswerteschaltung 18 dargestellt, an welche die Positionsdioden PD1 und PD2 der optischen Abbildungseinrichtung 12 und die Positionsdioden PD1′ und PD2′ der optischen Abbildungseinrichtung 13 angeschlossen sind. Da die Auswerteschaltungen 18 für die Verknüpfung der Signale der Positionsdioden PD1 und PD2 und der Positionsdioden PD1′ und PD2′ in gleicher Weise aufgebaut ist, ist diese nur einmal dargestellt, und es wird auch nur dieser Teil beschrieben.

Die von der Positionsdiode PD1 abgegebenen Signale sind mit A1 und A2 und die von der Positionsdiode PD2 abgegebenen Signale sind mit B1 und B2 bezeichnet. Die Summe der Signale A1 und A2 entspricht der Intensität, die Differenz der Signale A1 und A2 entspricht der Position des Leuchtdichteschwerpunktes auf der Positionsdiode PD1. Der Quotient aus Summe und Differenz ist das normierte Positionssignal, das unabhängig von der Intensität ist und in Millimeter geeicht werden kann. Die Summe der beiden normierten Positionssignale der Positionsdioden PD1 und PD2 ist ein Mass für die Parallelverschiebung und die Differenz beider Positionssignale ist ein Mass für den Tangens des Winkels β der Lichtquelle.

Zur Bildung der genannten Werte sind die Signale A1 und A2 bzw. B1 und B2 je einem Operationsverstärker 24 bzw. 24′ zur Summation und je einem Operationsverstärker 25 bzw. 25′ zur Differenzbildung zugeführt. Danach werden die gewonnenen Signale A1+A2 und A1−A2 bzw. B1+B2 und B1−B2 je einer analogen Schaltung 26 bzw. 26′ zur Quotientenbildung zugeführt. Aus diesen Signalen (A1−A2):(A1+A2) bzw. (B1−B2):(B1+B2) wird in je einem Operationsverstärker 27 bzw. 28 die Summe – zur Anzeige der Verschiebung V – und die Differenz – zur Anzeige von tanβ – gebildet.

In der nicht gezeigten Anzeigevorrichtung 19 werden die Signale V und V′ beispielsweise digital wiedergegeben. Dabei kann die Verstärkung der Auswerteschaltung 18 z.B. so eingestellt sein, dass ±10 V am Ausgang des Operationsverstärkers 27 ±2,5 mm bedeuten. Die Signale tanβ und tanβ′ werden ebenfalls durch eine digitale Anzeige dargestellt. Hierbei kann die Verstärkung der Auswerteschaltung 18 so eingestellt sein, dass ±10 V am Ausgang des Operationsverstärkers 28 gleich ±20° sind. Mit einem solchen Aufbau der Messvorrichtung wurde eine Auflösung von ±5 μm bei der Verschiebung und ±0,02° im Winkel erreicht.

**Patentansprüche**

1. Vorrichtung zum Messen der Lage einer langgestreckten Lichtquelle in dem bei der Herstellung der Leuchtschirme von Farbbildröhren verwendeten Lichthaus, mit einer anstelle der Wannen-Maskeneinheit auf das Lichthaus aufsetzbaren, mit Anschlagflächen und optischen Abbildungseinrichtungen versehenen Grundplatte, dadurch gekennzeichnet, dass zwei optische Abbildungseinrichtungen (12, 13) vorhanden sind, die die Lichtquelle (2) in eine Bildebene (BE) abbilden, und bei denen jeweils in der Bildebene (BE) wenigstens zwei, mit einer elektrischen Auswerteschaltung (18) verbundene Positionsdioden (PD) angeordnet sind.

2. Vorrichtung nach Anspruch 1, dadurch gekennzeichnet, dass die auf die Lichtquelle gerichteten optischen Achsen (16) der Abbildungseinrichtungen (12, 13) in der durch sie erzeugten Ebene einen Winkel (α) zwischen 45° und 135° einschliessen.

3. Vorrichtung nach Anspruch 1, dadurch gekennzeichnet, dass die Positionsdioden (PD) eine wesentlich grössere Länge als Breite aufweisen und derart in der Bildebene (BE) angeordnet sind, dass ihre längere Achse in Richtung der optischen Achse betrachtet, rechtwinklig zur abzubildenden Lichtquelle (2) ist.

4. Vorrichtung nach Anspruch 1, dadurch gekennzeichnet, dass die Auswerteschaltung (18) eine analoge Rechenschaltung ist.

5. Vorrichtung nach Anspruch 4, dadurch gekennzeichnet, dass zur Anzeige der in der Auswerteschaltung (18) erzeugten Signale eine Anzeigevorrichtung (19) vorgesehen ist.

6. Vorrichtung nach Anspruch 1, dadurch gekennzeichnet, dass die optischen Abbildungseinrichtungen je vier Positionsdioden (PD) enthalten.

## Claims

1. Apparatus for measuring the position of an elongated light source in the light housing used in the manufacture of luminescent screens of colour picture tubes, comprising a base plate provided with stop faces and optical projection devices, capable of being placed onto the light housing instead of the face-plate and aperture-mask unit, characterized in that two optical projection devices (12, 13) are provided which project the light source (2) in an imaging plane (BE), wherein, in the respective imaging plane (BE), there are disposed at least two position diodes (PD) which are connected to an electric evaluating circuit (18).

2. An apparatus as claimed in claim 1, characterized in that the optical axes (16) of the projection devices (12, 13) directed onto the light source form an angle ($\alpha$) ranging between 45° and 135° in the plane produced by them.

3. An apparatus as claimed in claim 1, characterized in that the position diodes (PD) have a substantially greater length than width and are disposed in such a way in the imaging plane (BE) that their longer axis, viewed in the direction of the optical axis, is disposed perpendicularly to the light source (2) to be imaged.

4. An apparatus as claimed in claim 1, characterized in that the evaluating circuit (18) is an analog computing circuit.

5. An apparatus as claimed in claim 4, characterized in that a display device (19) is provided for indicating the signals produced by the evaluating circuit (18).

6. An apparatus as claimed in claim 1, characterized in that the optical projection devices each contain four position diodes (PD).

## Revendications

1. Appareil pour mesurer la position d'une source de lumière allongée dans une enceinte d'exposition utilisée dans la fabrication d'écrans luminescents de tubes image de télévision couleurs, comprenant une plaque de base pourvue de face de butée et de dispositifs de projection optique, pouvant être placée sur l'enceinte d'exposition, à la place de l'ensemble panneau frontal et masque perforé, caractérisé en ce que deux dispositifs de projection optique (12, 13) sont prévus dans lesquels, dans le plan image respectif (BE), sont disposées au moins deux diodes de positionnement (PD) qui sont connectées à un circuit électrique d'évaluation (18).

2. Appareil conforme à la revendication 1, caractérisé en ce que les axes optiques (16) des dispositifs de projection (12, 13), dans la direction de la source de lumière, forment un angle ($\alpha$) compris entre 45° et 135°.

3. Appareil conforme à la revendication 1, caractérisé en ce que les diodes de positionnement (PD) ont une longueur sensiblement plus grande que leur largeur et sont disposées dans le plan image (BE) de telle manière que leur axe le plus long soit à angle droit par rapport à la source de lumière (2) dont l'image est formée.

4. Appareil conforme à la revendication 1, caractérisé en ce que le circuit d'évaluation (18) est un circuit de calcul analogique.

5. Appareil conforme à la revendication 4, caractérisé en ce qu'un dispositif d'affichage (19) est prévu pour l'affichage des signaux fournis par le circuit d'évaluation (18).

6. Appareil conforme à la revendication 1, caractérisé en ce que les dispositifs de projection optique comprennent chacun quatre diodes de positionnement (PD).

Fig.1a

Fig.1b

Fig.2

Fig.3